(19) Europäisches Patentamt
European Patent Office
Office européen des brevets

(11) **EP 2 583 811 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**12.04.2023 Patentblatt 2023/15**

(45) Hinweis auf die Patenterteilung:
**11.03.2015 Patentblatt 2015/11**

(21) Anmeldenummer: **12006404.3**

(22) Anmeldetag: **12.09.2012**

(51) Internationale Patentklassifikation (IPC):
***B29C 45/76*** (2006.01)

(52) Gemeinsame Patentklassifikation (CPC):
**B29C 45/766;** B29C 2945/76083; B29C 2945/7618;
B29C 2945/76498; B29C 2945/76531;
B29C 2945/76591; B29C 2945/76595;
B29C 2945/76658; B29C 2945/76735

(54) **Verfahren zur Quantifizierung von Prozessschwankungen bei einem Einspritzvorgang einer Spritzgießmaschine**

Method for quantifying process fluctuations in the injection process of a injection moulding machine

Procédé de quantification de basculements de procédés dans le cadre d'un processus d'injection d'une machine de moulage par injection

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.10.2011 AT 15182011**

(43) Veröffentlichungstag der Anmeldung:
**24.04.2013 Patentblatt 2013/17**

(73) Patentinhaber: **ENGEL AUSTRIA GmbH**
**4311 Schwertberg (AT)**

(72) Erfinder: **Pillwein, Georg**
**4210 Gallneukirchen (AT)**

(74) Vertreter: **Torggler & Hofmann Patentanwälte - Innsbruck**
**Torggler & Hofmann Patentanwälte GmbH & Co KG**
**Postfach 85**
**6020 Innsbruck (AT)**

(56) Entgegenhaltungen:
**EP-A1- 0 372 899       EP-B1- 0 784 535**
**WO-A1-91/14562       DE-A1- 4 446 857**
**DE-C1- 19 801 881       JP-A- 2 202 419**
**JP-A- 9 225 983**

- **DRILLICH, D.:**
  **"Spritzgießen/Prozessdatenverarbeitung Qualitätssicherung", Studienarbeit, Fakultät Maschinenwesen, RWTH Aachen, October 1989 (1989-10), pages 88-89,**
- **RHEINFELD, D.; et al.: "Anwendung von Prozessregel- und -steuergeräten bei der Spritzgieß-Verarbeitung", Kunststoffe, vol. 65, no. 8, 1975, pages 448-455,**
- **"Qualitätssicherung durch Prozessüberwachung", Kistler: QS im Spritzgießbetrieb, 1987, pages 129-142,**
- **Karlinger, P. et al, Van Quelitätsmerkmalen zu Einstelldaten, Kunststoffe 82 (1992) 3**

**Beschreibung**

Die Erfindung betrifft ein Verfahren zur Quantifizierung von Prozessschwankungen bei einem Einspritzvorgang einer Spritzgießmaschine, die eine über eine Vielzahl von Positionen verschiebbare Einspritzvorrichtung, insbesondere Schnecke, aufweist. Die Erfindung betrifft des Weiteren eine Spritzgießmaschine mit einer über eine Vielzahl von Positionen verschiebbare Einspritzvorrichtung, insbesondere Schnecke, einer Messvorrichtung zur Messung der Positionen der Einspritzvorrichtung, wenigstens einer Messvorrichtung zur Messung wenigstens einer für den Einspritzvorgang der Spritzgießmaschine charakteristischen Größe, wenigstens einer Kavität und einer Steuerungs- und/oder Regelungseinrichtung zur Durchführung des erfindungsgemäßen Verfahrens.

Es sei angemerkt, dass als Einspritzvorrichtung anstelle einer Schnecke z.B. auch ein Kolben verwendet werden kann.

Ein Spritzgießprozess unterliegt im Regelfall bestimmten Prozessschwankungen, sogar dann, wenn die Einspritzbewegung von Zyklus zu Zyklus exakt reproduziert werden kann. Diese Prozessschwankungen wirken sich in negativer Weise auf die Formteilqualität, wie z.B. die Gewichtskonstanz der Spritzgussteile, aus. Dabei spielen insbesondere zwei Prozessschwankungen eine Rolle: Zum einen Schwankungen des Schussvolumens und zum anderen Schwankungen des Druckbedarfs zur Füllung der Kavität eines Werkzeugs bzw. von mehreren Kavitäten im Falle eines Mehrfachwerkzeugs. Erstere werden zum Beispiel durch Schwankungen beim Dosiervorgang, wie z.B. Schwankungen des Dosierhubs, Nachströmen von Kunststoffschmelze aus dem Bereich der Plastifizierschnecke nach der Kompressionsentlastung und/oder Unterschiede im Schließverhalten der Rückstromsperre, wie z.B. unterschiedliche Schließzeitpunkte, hervorgerufen. Schwankungen des Druckbedarfs zur Füllung der Kavität bzw. der Kavitäten sind z.B. bedingt durch Änderungen der Materialviskosität, u.a. hervorgerufen durch Chargenschwankungen des verwendeten Kunststoffgranulats, Änderungen der Schmelzetemperatur und/oder Änderungen der Werkzeugtemperatur.

Für einzelne Prozessschwankungen gibt es bereits Ansätze, diese zu erkennen und in weiterer Folge zu kompensieren. Beispielsweise ist aus der DE 10 2008 037 098 A1 eine Methode zur Erkennung bzw. Kompensation von Schwankungen des Schließverhaltens der Rückstromsperre bekannt. Es handelt sich dabei allerdings um eine relativ aufwendige Methode, die spezielle Prozessführungsvarianten unter Verwendung einer Verschlussdüse erfordert. Des Weiteren sind Methoden zur Erkennung bzw. Kompensation von Viskositätsschwankungen bekannt.

Nachteilig bei allen diesen Ansätzen ist, dass sie nur auf die Erkennung bzw. Kompensation einer bestimmten Prozessschwankung ausgerichtet sind, und dass es mit ihrer Hilfe nicht möglich ist, unterschiedliche Prozessschwankungen klar voneinander zu unterscheiden. Eine reine Kombination der unterschiedlichen Ansätze wäre technisch sehr aufwendig.

DE-A-4446857 offenbart ein Verfahren zur Quantifizierung von Prozessschwankungen bei einem Einspritzvorgang einer Spritzgießmaschine , die eine über eine Vielzahl von Positionen verschiebbare Einspritzvorrichtung aufweist.

Aufgabe der vorliegenden Erfindung ist es, die vorbeschriebenen Nachteile zu vermeiden und ein gegenüber dem Stand der Technik verbessertes und vereinfachtes Verfahren zur Quantifizierung von Prozessschwankungen bei einem Einspritzvorgang einer Spritzgießmaschine sowie eine derartige Spritzgießmaschine anzugeben. Eine derartige Quantifizierung von Prozessschwankungen ist Voraussetzung für eine in weiterer Folge im Bedarfsfall erfolgende Kompensation derselben.

Diese Aufgabe wird durch ein Verfahren gemäß Anspruch 1 und eine Spritzgießmaschine gemäß Anspruch 17 gelöst. Vorteilhafte Ausführungsformen sind in den abhängigen Ansprüchen definiert.

Alternativ zur Verwendung der Positionen der Einspritzvorrichtung kann die wenigstens eine für den Einspritzvorgang charakteristische Größe auch an einer Vielzahl von Zeitpunkten des Einspritzvorgangs gemessen und mit einer entsprechenden Referenzfunktion verglichen werden.

Für den Einspritzvorgang charakteristische Größen können der Einspritzdruck, der Schmelzedruck, der Forminnendruck, die Forminnentemperatur, die Einspritzgeschwindigkeit, das Antriebsmoment und/oder eine davon abgeleitete Größe, wie z.B. die Einspritzarbeit, sein. Zur Messung dieser charakteristischen Größen weist die Spritzgießmaschine geeignete Messvorrichtungen auf. Die drei genannten Druckgrößen sind proportional zueinander. Sie unterscheiden sich nur dadurch, ob sie direkt oder indirekt und an welchem Ort sie gemessen werden. So kann der Einspritzdruck zum Beispiel bei einer elektrisch angetriebenen Spritzgießmaschine indirekt aus der mechanischen Verformung einer ringförmigen Membran und bei hydraulischen Spritzaggregaten über den Druck im Hydraulikzylinder ermittelt werden. Im Vergleich dazu wird der Schmelzedruck und der Forminnendruck direkt mittels geeigneter Drucksensoren gemessen und zwar im Falle des Schmelzedrucks im Schneckenvorraum (wenn es sich bei der Einspritzvorrichtung um eine Schnecke handelt) und im Falle des Forminnendrucks in der Kavität bzw. in den Kavitäten. Alternativ zum Druck könnte bei elektrischen Antrieben auch eine aus dem Antriebsmoment errechnete Messgröße verwendet werden. Die Forminnentemperatur kann beispielsweise mittels eines geeigneten Temperatursensors, der im Bereich der Kavitätenoberfläche angeordnet ist, gemessen werden.

Die Positionen der verschiebbaren Einspritzvorrichtung können bei elektrischen Antrieben aus der Winkelposition des Antriebs unter Zuhilfenahme des entsprechenden Übersetzungsverhältnisses ermittelt werden. Bei hydraulischen Spritzaggregaten kann hierzu z.B. ein externer Wegaufnehmer am Einspritzzylinder verwendet werden.

Bei den Prozessschwankungen, die mittels des erfindungsgemäßen Verfahrens quantifiziert werden können, handelt es sich um die bereits in der Beschreibungseinteitung angesprochenen Schwankungen des Schussvolumens und um Schwankungen des Druckbedarfs zur Füllung wenigstens einer Kavität der Spritzgießmaschine während des Einspitzvorgangs. Die Prozessschwankung in Form von Schwankungen des Schussvolumens kann dabei einer Verschiebung der Messfunktion in Bezug auf die Referenzfunktion in Verschieberichtung der Einspritzvorrichtung zugeordnet werden. Bezeichnet man die Verschieberichtung der Einspritzvorrichtung mit x und die Verschiebung der Messfunktion in Bezug auf die Referenzfunktion in diese Richtung mit $\Delta x$, so lautet eine mathematische Transformation, die dieser Verschiebung Rechnung trägt:

$$x' = x - \Delta x.$$

$\Delta x$ stellt den frei wählbaren Transformationsparameter dar, dem die Prozessschwankung "Schwankungen des Schussvolumens" zugeordnet ist.

Zur Quantifizierung der Prozessschwankung in Form von Schwankungen des Druckbedarfs zur Füllung der wenigstens einen Kavität der Spritzgießmaschine während des Einspritzvorgangs würde man als für den Einspritzvorgang charakteristische Größe den Einspritzdruck, den Schmelzedruck und/oder den Forminnendruck messen. Diese Prozessschwankung kann dann einer Skalierung (mit einem Faktor kp) der Messfunktion im Bezug auf die Referenzfunktion in Richtung der gemessenen Druckgröße (p) - als Transformationsparameter - zugeordnet werden. Eine entsprechende mathematische Transformation mit dem frei wählbaren Transformationsparameter $k_p$ würde lauten:

$$p' = k_p * p.$$

Neben diesen beiden Prozessschwankungen eignet sich das erfindungsgemäße Verfahren des Weiteren beispielsweise zur Quantifizierung der folgenden Prozessschwankungen:

- Konstante Leckage pro zurückgelegter Wegeinheit bei Verarbeitung ohne Rückstromsperre (z.B. bei der Verarbeitung von PVC). Diese Prozessschwankung kann als Transformationsparameter einem Faktor $k_L$ zugeordnet werden, der einer linearen Umskalierung (der Messfunktion in Bezug auf die Referenzfunktion) gemäß der folgenden mathematischen Transformation entspricht:

$$x' = x - k_L * (x_0 - x),$$

wobei $x_0$ eine Startposition angibt.
- Leckage der Rückstromsperre proportional zum aktuell anstehenden Druck (mathematische Transformation:

$$x_i' = x_i + k_L * \Sigma_{j=1...i}(p_j * \Delta t),$$

wobei der Index i die einzelnen Messpunkte durchläuft und t die Zeit bezeichnet).
- Schwankungen des Anfangsdrucks, z.B. bei unzureichender Kompressionsentlastung. Diese Prozessschwankung kann als Transformationsparameter einer Verschiebung in Richtung des Drucks zugeordnet werden:

$$p' = p + \Delta p.$$

- Schwankungen der Schmelzetemperatur und/oder des Durchflusses bzw. der Vorlauftemperatur im Falle einer Werkzeugkühlung. Derartige Prozessschwankungen können mithilfe der folgenden mathematischen Transformation erfasst werden:

$$T'(x') = k_T * T(x) + T_0,$$

wobei der Skalierungsfaktor $k_T$ und der Temperaturoffset $T_0$ die entsprechenden frei wählbaren Transformationsparameter sind.

Ein großer Vorteil der vorliegenden Erfindung besteht darin, dass die den verschiedenen Prozessschwankungen zugeordneten Transformationsparameter bzw. die entsprechenden Transformationen beliebig miteinander kombiniert werden können, sodass auch mehrere Prozessschwankungen gleichzeitig erkannt bzw. quantifiziert werden können. Beispielsweise lautet eine mathematische Transformation zur Quantifizierung der Prozessschwankung in Form von Schwankungen des Schussvolumens und der Prozessschwankung in Form von Schwankungen des Druckbedarfs zur Füllung wenigstens einer Kavität der Spritzgießmaschine während des Einspritzvorgangs wie folgt:

$$p'(x')=k_p{}^*p(x-\Delta x).$$

Die im Zuge des erfindungsgemäßen Verfahrens bereitgestellte Referenzfunktion kann beispielsweise dadurch ermittelt werden, dass in einem Referenzzyklus während zumindest eines Teils des Einspritzvorgangs wenigstens eine für den Einspritzvorgang charakteristische Größe für eine Vielzahl von Positionen der Einspritzvorrichtung gemessen und durch Zuordnung der jeweiligen Messwerte zu den jeweiligen Positionen die Referenzfunktion gebildet wird. Bei einem Mehrfachwerkzeug mit wenigstens zwei Kavitäten ist es darüber hinaus denkbar, dass für jede der Kavitäten während zumindest eines Teiles des Einspritzvorgangs wenigstens eine für den Einspritzvorgang in jede der Kavitäten charakteristische Größe für eine Vielzahl von Positionen der Einspritzvorrichtung gemessen und durch Zuordnung der jeweiligen Messwerte zu den jeweiligen Positionen eine Messfunktion gebildet wird. Anschließend könnte dann eine dieser Messfunktionen einer der Kavitäten als Referenzfunktion festgelegt werden oder aber eine über wenigstens zwei Messfunktionen zweier Kavitäten gemittelte Funktion als Referenzfunktion bereitgestellt werden.

Vorteilhafterweise erfolgt die angesprochene Bestimmung des wenigstens einen frei wählbaren Transformationsparameters mittels eines Regressionsverfahrens. Beispielhaft sei an dieser Stelle die lineare Regression mit der Methode der kleinsten Fehlerquadrate skizziert:

Gegeben seien eine Referenzfunktion $f_R$ bestehend aus Wertepaaren $(x_{R,i}, P_{R,i})$, eine Messfunktion $f_M$ bestehend aus Wertepaaren $(X_{Mi}, P_{M,i})$, eine Transformation $U_k$, die die Wertepaare der Messfunktion $f_M$ in Wertepaare $(x_{B,i}, p_{B,i})$ der Bildfunktion $f_B$ abbildet. Im betrachteten Beispiel sei die Transformation $U_k$ (mit den Transformationsparametem $k_p$ und $p_0$) definiert als:

$$U_k:$$
$$x_{B,i} = x_{M,i}$$
$$p_{B,i} = k_p p_{M,i} + p_0$$

Diese Transformation lässt die x-Werte unverändert, beinhaltet aber eine Umskalierung der p-Werte um den Faktor $k_p$ und zusätzlich eine konstante Verschiebung um einen Druckoffset $p_0$.

Der Fehler $\delta_1$ sei definiert als die Differenz zwischen den Druckwerten der Referenzfunktion und den Druckwerten der Bildfunktion:

$$\varepsilon_i = p_{R,i} - p_{B,i}$$

Gesucht sei jene Parameterpaarung $k_p$, $p_0$, welche die Quadratsumme der Fehler $\sum_i \varepsilon_i^2$ minimiert. Obige Transformation lässt sich unter Verwendung der folgenden Notation

$$\mathbf{x_B} = \begin{pmatrix} x_{B,1} \\ x_{B,2} \\ x_{B,3} \\ \vdots \\ x_{B,N} \end{pmatrix}, \quad \mathbf{x_M} = \begin{pmatrix} x_{M,1} \\ x_{M,2} \\ x_{M,3} \\ \vdots \\ x_{M,N} \end{pmatrix}, \quad \mathbf{p_B} = \begin{pmatrix} p_{B,1} \\ p_{B,2} \\ p_{B,3} \\ \vdots \\ p_{B,N} \end{pmatrix}, \quad \mathbf{X} = \begin{pmatrix} p_{M,1} & 1 \\ p_{M,2} & 1 \\ p_{M,3} & 1 \\ \vdots & \vdots \\ p_{M,N} & 1 \end{pmatrix}, \quad \boldsymbol{\beta} = \begin{pmatrix} k_p \\ p_0 \end{pmatrix}$$

in Vektorschreibweise folgendermaßen darstellen:

$$U_k :$$
$$\mathbf{x_B} = \mathbf{x_M}$$
$$\mathbf{p_B} = \mathbf{X\beta}$$

Mit dem Fehler in Vektorschreibweise $\varepsilon = p_R - p_B = p_R - X\beta$ gilt also:

$$\mathbf{p_R} = \mathbf{X\beta} + \boldsymbol{\varepsilon}$$

Die Lösung des Problems unter der Randbedingung $\varepsilon^2 \to$ min! lautet in Matrixschreibweise:

$$\boldsymbol{\beta} = \begin{pmatrix} k_p \\ p_0 \end{pmatrix} = \left(\mathbf{X^T X}\right)^{-1} \mathbf{X^T p_R}$$

Die gesuchten Transformationsparameter $k_p$ und $p_0$ können also direkt durch einfache Matrixoperationen aus den $p_{M,i}$ und $p_{R,i}$ errechnet werden.

Gemäß einem weiteren Ausführungsbeispiel der Erfindung kann es bevorzugt vorgesehen sein, dass zumindest ein Teil der Punktpaare aus dem die Messfunktion gebildet wurde, mit einer unterschiedlichen Gewichtung in die Bestimmung des wenigstens einen frei wählbaren Transformationsparameters einbezogen wird.

Ferner wird vorgeschlagen, dass die Bestimmung des wenigstens einen frei wählbaren Transformationsparameters während des Einspritzvorgangs, in dem die Messfunktion gebildet wurde, oder im Anschluss an einen ersten Spritzgießzyklus erfolgt. In letzterem Falle kann es vorgesehen sein, dass die Bestimmung des wenigstens einen frei wählbaren Transformationsparameters entweder zwischen dem ersten und einem zweiten, nachfolgenden Spritzgießzyklus oder aber während eines zweiten, nachfolgenden Spritzgießzyklus erfolgt.

Wie eingangs erwähnt, stellt die Quantifizierung von Prozessschwankungen bei einem Einspritzvorgang einer Spritzgießmaschine die Voraussetzung dafür dar, dass die unter Verwendung des wenigstens einen Transformationsparameters quantifizierte Prozessschwankung durch wenigstens eine entsprechende Korrekturmaßnahme ausgeglichen werden kann. Ein derartiger Ausgleich soll in einem bevorzugten Ausführungsbeispiel des erfindungsgemäßen Verfahrens vorgesehen sein. Erfolgt die Bestimmung des wenigstens einen Transformationsparameters während des Einspritzvorgangs, in dem die Messfunktion gebildet wurde, so kann der Ausgleich der unter Verwendung dieses wenigstens einen Transformationsparameters quantifizierten Prozessschwankung durch die wenigstens eine entsprechende Korrekturmaßnahme noch in dem Spritzgießzyklus des Einspritzvorgangs, in dem die Messfunktion gebildet wurde, erfolgen. In manchen Fällen kann es aber auch vorteilhaft sein, dass sich der Ausgleich der unter Verwendung des wenigstens einen Transformationsparameters quantifizierten Prozessschwankung durch die wenigstens eine entsprechende Korrekturmaßnahme über wenigstens einen dem Spritzgießzyklus, in dem die Prozessschwankung quantifiziert wurde, nachfolgenden Spritzgießzyklus erstreckt.

Beispielhaft seien folgende Korrekturmaßnahmen genannt:

- Bei einer Prozessschwankung in Form von Schwankungen des Schussvolumens können mögliche Korrekturmaßnahmen darin bestehen, dass

    ○ der Umschaltpunkt verschoben wird,

○ das restliche Einspritzprofil verschoben wird,
○ das Geschwindigkeitsprofil beim Einspritzen korrigiert wird und/oder
○ die Nachdruckzeit verändert wird, sodass sich die Endposition der Einspritzvorrichtung um Δx verschiebt.

- Im Falle einer Prozessschwankung in Form von Schwankungen des Druckbedarfs zur Füllung wenigstens einer Kavität der Spritzgießmaschine während des Einspritzvorgangs bestehen mögliche Korrekturmaßnahmen darin,

○ den Umschaltdruck,
○ die Nachdruckhöhe und/oder
○ das Nachdruckprofil zu verändern.

- Handelt es sich bei der Prozessschwankung um Schwankungen der Schmeizetemperatur oder Schwankungen des Durchflusses bzw. der Vorlauftemperatur im Falle einer Werkzeugkühlung, so kann eine mögliche Korrekturmaßnahme darin bestehen, die Zylindertemperatur, die Heißkanaltemperatur und/oder (über die Durchflussmenge bzw. Vorlauftemperatur) die Werkzeugtemperatur zu verändern, so dass der Forminnentemperaturverlauf unverändert bleibt.

Gemäß einem weiteren Aspekt der Erfindung wird Schutz auch begehrt für eine Spritzgießmaschine mit einer über eine Vielzahl von Positionen verschiebbaren Einspritzvorrichtung, insbesondere Schnecke, einer Messvorrichtung zur Messung der Positionen der Einspritzvorrichtung, wenigstens einer Messvorrichtung zur Messung wenigstens einer für den Einspritzvorgang der Spritzgießmaschine charakteristischen Größe, wenigstens einer Kavität und einer Steuerungs- und/oder Regelungseinrichtung zur Durchführung des erfindungsgemäßen Verfahrens.

Weitere Einzelheiten und Vorteile der vorliegenden Erfindung werden anhand der Figurenbeschreibung unter Bezugnahme auf die in den Zeichnungen dargestellten Ausführungsbeispielen im Folgenden näher erläutert. Darin zeigen

Fig. 1      eine schematisch dargestellte perspektivische Gesamtansicht einer Spritzgießmaschine,
Fig. 2      die zur Durchführung des erfindungsgemäßen Verfahrens wesentlichen Teile einer Einspritzeinrichtung einer Spritzgießmaschine in einem schematisch dargestellten horizontalen Schnitt,
Fig. 3      ein schematisch dargestelltes Diagramm zur Illustration des erfindungsgemäßen Verfahrens,
Fig. 4a und 4b   Beispielkurven für den Verlauf des Einspritzdrucks in Abhängigkeit von der Position der Einspritzvorrichtung im Falle einer Prozessschwankung in Form von Schwankungen des Schussvolumens,
Fig. 5a und 5b   Beispielkurven für den Verlauf des Schmelzedrucks in Abhängigkeit von der Position der Einspritzvorrichtung im Falle einer Prozessschwankung in Form von Schwankungen des Schussvolumens,
Fig. 6a und 6b   Beispielkurven für den Verlauf des Forminnendrucks in Abhängigkeit von der Position der Einspritzvorrichtung im Falle einer Prozessschwankung in Form von Schwankungen des Schussvolumens,
Fig. 7a und 7b   Beispielkurven für den Verlauf des Einspritzdrucks bei Vorliegen einer Prozessschwankung in Form von Schwankungen des Schussvolumens und einer Prozessschwankung in Form von Schwankungen des Druckbedarfs zur Füllung wenigstens einer Kavität der Spritzgießmaschine während des Einspritzvorgangs.
Fig. 8a und 8b   Beispielkurven im Falle einer Schwankung der Forminnentemperatur und
Fig. 9a und 9b   Beispielkurven für den Verlauf des Einspritzdrucks in den unterschiedlichen Kavitäten eines Mehrfachwerkzeugs.

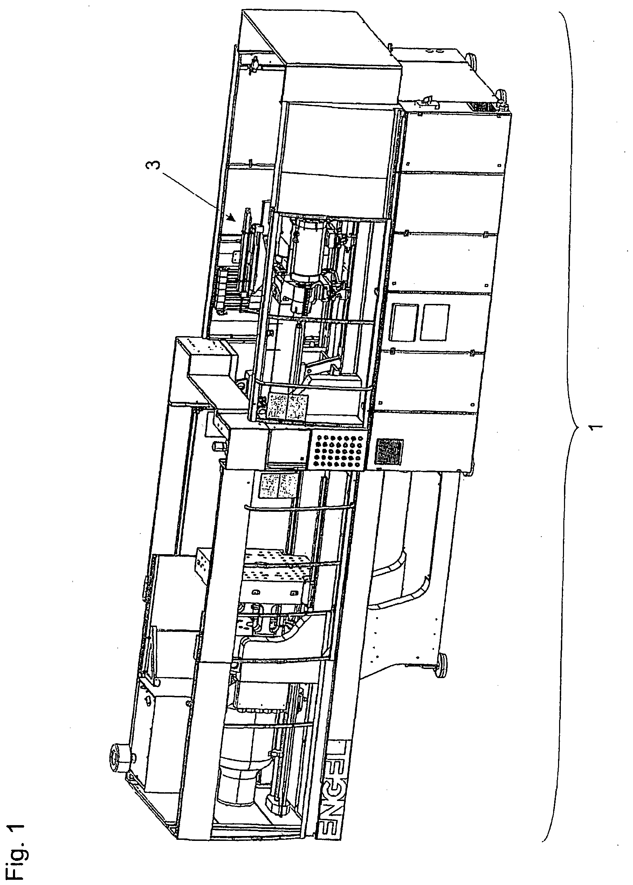

In der Fig. 1 ist schematisch eine perspektivische Gesamtansicht einer (an sich bekannten) Spritzgießmaschine 1 dargestellt, die im Zusammenhang mit der folgenden Erfindung relevant ist. Sie umfasst eine Schließeinheit links und eine Einspritzeinheit 3 rechts.

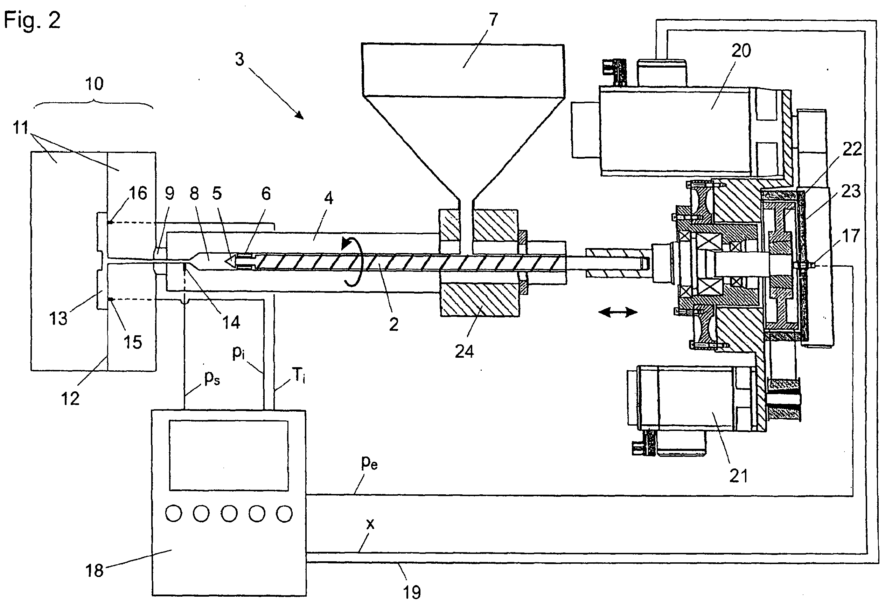

In der Fig. 2 sind die zum Verständnis der Erfindung relevanten Teile der Einspritzeinrichtung 3 einer Spritzgießmaschine näher dargestellt. Zentraler Bestandteil dieser Einspritzeinrichtung 3 ist eine drehbar und verschiebbar in einem Plastifizierzylinder 4 gelagerte Plastifizierschnecke 2 als Einspritzvorrichtung. Die Verschiebbarkeit der Schnecke 2 in Längsrichtung sowie die Drehbarkeit der Schnecke 2 um ihre Längsachse seien mit den beiden Pfeilen angedeutet. Die Schnecke 2 weist - in der Zeichnung auf der linken Seite zu sehen - eine Spitze 5 mit einem Sperrring 6 auf, der verschiebbar gelagert ist und Bestandteil einer Rückstromsperre ist.

Ein Spritzgießzyklus besteht im Wesentlichen aus zwei Teilen - dem Dosiervorgang und dem Einspritzvorgang. Während des Dosiervorgangs wird Kunststoffgranulat in den Trichter 7 eingefüllt und gelangt in den Bereich der sich drehenden Plastifierschnecke 2. Durch die Drehbewegung der Schnecke 2 wird das Kunststoffgranulat in Richtung des Schneckenvorraums 8 nach links bewegt und dabei gleichzeitig durch die auftretende Scherwärme und die in manchen Fällen zusätzlich über das Heizen des Plastifizierzylinders 4 zugeführte Wärme plastifiziert. Die Kunststoffschmelze fließt weiterer Folge während des Dosiervorgangs über die geöffnete Rückstromsperre in den Schneckenvorraum 8, sammelt sich dort an und schiebt dadurch die Plastifizierschnecke 2 nach rechts.

Wenn sich genügend Kunststoffschmelze in dem Schneckenvorraum 8 angesammelt hat, wird die Rückstromsperre geschlossen und es kann der Einspritzvorgang beginnen. Dazu wird die in manchen Fällen vorhandene Verschlussdüse 9 geöffnet und gleichzeitig die gesamte Schnecke 2 nach links verschoben. Dadurch wird die Kunststoffschmelze aus dem Schneckenvorraum 8 durch den sogenannten Heißkanal in die Kavität 13, die sich zwischen den beiden Formhälften 11 eines Werkzeugs 10 befindet, gepresst. Mit dem Bezugszeichen 12 ist die Werkzeugtrennebene der beiden Formhälften 11 bezeichnet.

Bei dem in der Fig. 2 dargestellten Ausführungsbeispiele der Einspritzeinrichtung sind zur technischen Realisierung der Längsbewegung bzw. der Drehbewegung der Plastifizierschnecke zwei Servomotoren vorgesehen, wobei der Servomotor 20 die Plastifizierschnecke (über Spindeln) in Längsrichtung verschiebt und der Servomotor 21 die Drehbewegung der Plastifizierschnecke über die Antriebsscheibe 22 antreibt. Auf die konstruktiven Einzelheiten dieser Antriebe sei an dieser Stelle nicht näher eingegangen, da sie zum Stand der Technik gehören. Es sei noch darauf hingewiesen, dass die Plastifizierschnecke 2 in Längsrichtung relativ zu einer feststehenden Trägerplatte 24, die mit dem Plastifizierzylinder 4 und dem Einfülltrichter 7 verbunden ist, verschoben wird.

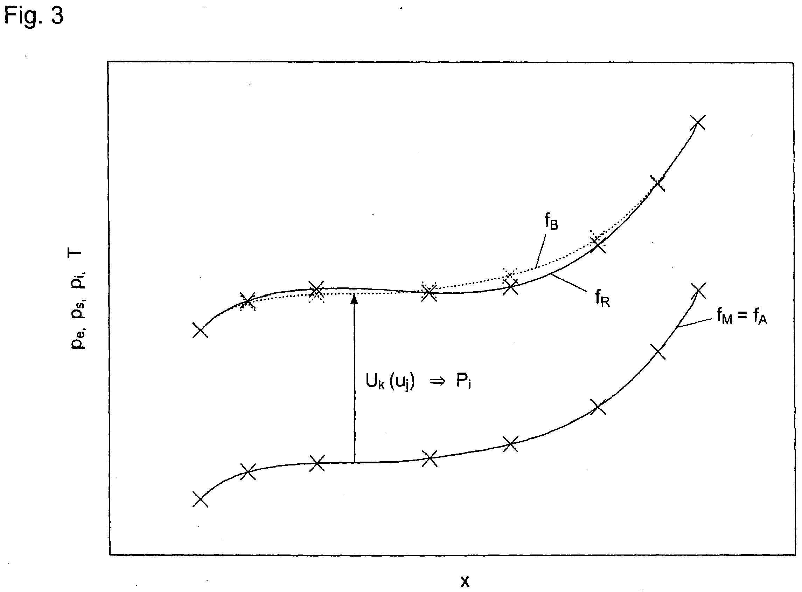

Wie bereits ausgeführt, können nun während des Einspritzvorgangs der Kunststoffschmelze in die Kavität 13 unterschiedliche Prozessschwankungen auftreten, welche die Formteilqualität negativ beeinflussen. Hierzu zählen Schwankungen des Schussvolumens und Schwankungen des Druckbedarfs zur Füllung der Kavität 13. Ein erfindungsgemäßer Verfahrensschritt zur Quantifizierung dieser Prozessschwankungen besteht darin, dass während des Einspritzvorgang für den Einspritzvorgang charakteristische Größen für eine Vielzahl von Positionen x der Schnecke 2 gemessen, und durch Zuordnung der jeweiligen Messwerte zu den jeweiligen Positionen x Messfunktionen $f_M$ gebildet werden. Zu diesen charakteristischen Größen gehören der Einspritzdruck $p_e$, der Schmelzedruck $p_s$, der Forminnendruck $p_i$ und/oder die Forminnentemperatur $T_i$. Zur Messung dieser Größen sind entsprechende Druck- bzw. Temperatursensoren 14, 15, 16 und 17 vorgesehen. In dem in der Fig. 2 dargestellten Ausführungsbeispiel ist der Sensor 15 fest mit einem Bügel 23 verbunden. Er misst den Abstand zur Antriebsscheibe 22 und damit indirekt den Einspritzdruck $p_e$. Die Signale der Messsensoren 14, 15, 16 und 17 werden an eine Steuerungs- und Regelungseinrichtung 18 ebenso weitergeleitet, wie die Messwerte aus denen die Positionen x der Schnecke 2 ermittelt werden. In der Steuerungs- und Regelungseinrichtung 18 erfolgen dann die weiteren Verfahrensschritte zur Quantifizierung der Prozessschwankungen (und darauf fußend die Steuerung der entsprechenden Korrekturmaßnahmen, z.B. über die Ansteuerung 19 des Längsantriebs). Die Verfahrensschritte zur Quantifizierung der Prozessschwankungen seien anhand der Fig. 3 im Folgenden näher erläutert:

In der Fig. 3 ist exemplarisch eine Messfunktion $f_M$ dargestellt, die durch Zuordnung der jeweiligen Messwerte der charakteristischen Größe $p_e$, $p_s$, $p_i$ bzw. T zu den jeweiligen Positionen x der Schnecke gebildet wurde. Diese Messfunktion $f_M$ wird in weiterer Folge als Ausgangsfunktion $f_A$ für eine bereitgestellte mathematische Transformation $U_k$ verwendet, welche in Abhängigkeit der frei wählbaren Transformationsparameter $u_j$ diese Ausgangsfunktion $f_A$ in eine Bildfunktion $f_B$ transformiert. Dabei werden die frei wählbaren Transformationsparameter $u_j$ so bestimmt, dass die sich ergebende Bildfunktion $f_B$ bezüglich eines vorbestimmten Fehlermaßes bestmöglich mit einer Referenzfunktion $f_R$ übereinstimmt, wobei die Referenzfunktion $f_R$ für jede der Positionen x der Schnecke bei denen die charakteristische Größe $p_e$, $p_s$, $p_i$ bzw. T gemessen wurde, einen vorbestimmten Wert aufweist. In dem bevorzugten Ausführungsbeispiel wurde diese Referenzfunktion $f_R$ in einem Referenzzyklus während des Einspritzvorgangs aufgenommen. Schließlich werden die, diesen Transformationsparametern $u_j$ zugeordneten Prozessschwankungen $P_l$ in Bezug auf die Referenzfunktion $f_R$ unter Verwendung der Transformationsparameter $u_j$ quantifiziert.

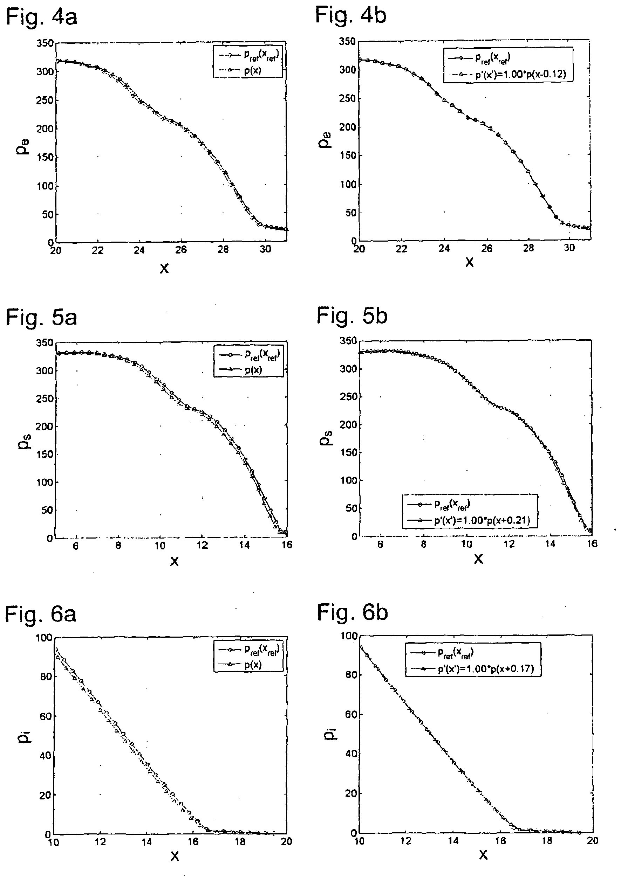

Konkrete Beispiele dieses Verfahrens seien im Folgenden anhand der Figuren 4a bis 9b näher erläutert. Fig. 4a zeigt eine Messkurve für den Einspritzdruck $p_e$ in Anhängigkeit von der Schneckenposition x (offene Dreiecke). Außerdem ist eine Referenzkurve dargestellt (offene Kreise). Die Messfunktion wird nun als Ausgangsfunktion für die mathematische Transformation

$$p'(x') = k_p * p(x - \Delta x)$$

verwendet und die frei wählbaren Transformationsparameter $k_p$ und $\Delta x$ derart bestimmt, dass die Bildfunktion der Messfunktion bestmöglich mit der Referenzfunktion übereinstimmt (s. Fig. 4b). Dabei erhält man für $k_p$ einen Wert von 1 und für $\Delta x$ einen Wert von 0,12. Das bedeutet, dass in diesem Fall als Prozessschwankung in Form einer Schwankung des Schussvolumens vorgelegen haben muss. Diese Information bzw. der Wert für diese Prozessschwankung wird nun in weiterer Folge dazu verwendet, diese Prozessschwankung durch eine entsprechende Korrekturmaßnahme auszugleichen. Mögliche Korrekturmaßnahmen wurden bereits weiter oben angeführt.

in den Figurenpaaren 5a/5b, 6a/6b und 7a/7b sind weitere derartige Beispiele dargestellt, wobei in den Fig.

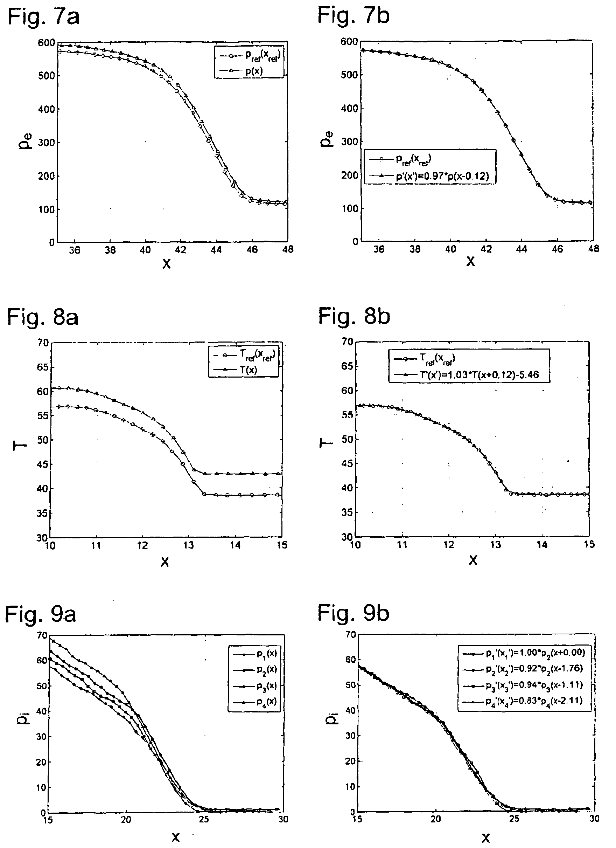

5a/5b als charakteristische Größe der Schmelzedruck $p_s$, in den Fig. 6a/6b als charakteristische Größe der Forminnendruck $p_i$ und in den Fig. 7a/7b als charakteristische Größe der Einspritzdruck $p_e$ gemessen wurde. In den Fig. 5a/5b und 6a/6b wurde wiederum als Prozessschwankung eine Schwankung des Schussvolumens quantifiziert, wohingegen in den Fig. 7a/7b eine Überlagerung zweier Prozessschwankungen, nämlich einer Schwankung des Schlussvolumens und einer Schwankung des Druckbedarfs zur Füllung der Kavität vorlag.

Im Falle des Figurenpaares 8a/8b wurde als charakteristische Größe die Forminnentemperatur $T_i$ in Abhängigkeit von der Schneckenposition x gemessen und auf die Messfunktion die mathematische Transformation

$$T'(x')=k_T*T(x)+T_0$$

angewandt.

Das Figurenpaar 9a/9b zeigt ein Beispiel für die Verläufe des Forminnendrucks $p_i$ in Abhängigkeit von der Position x der Schnecke in den einzelnen Kavitäten eines 4-fach Werkzeugs. Die $p_i(x)$-Verläufe unterscheiden sich deutlich voneinander. Als Referenzkurve wurde die Kurve $p_i(x)$ festgelegt. Die Druckverläufe der übrigen Kavitäten wurden mit Hilfe der Transformation

$$p'(x')=k_p*p(x-\Delta x)$$

an diese Referenzkurve anpassen und auf diese Weise die Parameter $k_p$ und $\Delta x$ für die einzelnen Kavitäten identifizieren. Eine x-Verschiebung $\Delta x$ entspricht in diesem Fall einer Füllung der einzelnen Kavitäten zu unterschiedlichen Zeitpunkten, wobei unterschiedliche Werte des Parameters $k_p$ Unterschieden im Druckbedarf zwischen den einzelnen Kavitäten entsprechen. Diese können ihre Ursache beispielsweise in Unterschieden der Schmelzetemperatur oder in der Werkzeugtemperatur haben. Diese Unterschiede können in weiterer Folge - beispielsweise bei einem Heißkanalwerkzeug - beispielsweise durch folgende Maßnahmen ausgeglichen werden: verzögertes Öffnen von Verschlussdüsen der einzelnen Heißkanäle, Variation der Temperaturen der Heißkanaldüsen und/oder Variation von Vorlauftemperatur oder Durchfluss von einzelnen Werkzeugtemperierkreisen.

## Patentansprüche

1. Verfahren zur Quantifizierung von Prozessschwankungen ($P_i$) bei einem Einspritzvorgang einer Spritzgießmaschine (1), die eine über eine Vielzahl von Positionen (x) verschiebbare Einspritzvorrichtung (2), insbesondere Schnecke (2), aufweist, **dadurch gekennzeichnet, dass**

   - wenigstens eine mathematische Transformation ($U_k$), welche in Abhängigkeit wenigstens eines frei wählbaren Transformationsparameters ($u_j$) eine Ausgangsfunktion ($f_A$) in eine Bildfunktion ($f_B$) transformiert, bereit gestellt wird, wobei dem wenigstens einen Transformationsparameter ($u_j$) eine Prozessschwankung ($P_i$) zugeordnet ist,
   - während zumindest eines Teils des Einspritzvorgangs wenigstens eine für den Einspritzvorgang charakteristische Größe ($p_e$, $p_s$, $p_i$, $T_i$) für eine Vielzahl von Positionen (x) der Einspritzvorrichtung (2) gemessen und durch Zuordnung der jeweiligen Messwerte zu den jeweiligen Positionen eine Messfunktion ($f_M$) gebildet wird,
   - eine Referenzfunktion ($f_R$) bereit gestellt wird, die für jede der Positionen (x) der Einspritzvorrichtung (2), bei denen die charakteristische Größe ($p_e$, $p_s$, $p_i$, $T_i$) gemessen wurde, einen vorbestimmten Wert aufweist,
   - die Messfunktion ($f_M$) als Ausgangsfunktion ($f_A$) für die wenigstens eine bereit gestellte mathematische Transformation ($U_k$) verwendet wird, wobei der wenigstens eine frei wählbare Transformationsparameter ($u_j$) dieser wenigstens einen mathematischen Transformation ($U_k$) so bestimmt wird, dass die sich ergebende Bildfunktion ($f_B$) bezüglich eines vorbestimmten Fehlermaßes bestmöglich mit der Referenzfunktion ($f_R$) übereinstimmt, und die diesem Transformationsparameter ($u_j$) zugeordnete Prozessschwankung ($P_i$) in Bezug auf die Referenzfunktion ($f_R$) unter Verwendung des wenigstens einen Transformationsparameters ($u_j$) quantifiziert wird,
   - es sich bei einer der Prozessschwankungen um Schwankungen des Schussvolumens handelt und es sich bei einer der Prozessschwankungen um Schwankungen des Druckbedarfs zur Füllung wenigstens einer Kavität (13) der Spritzgießmaschine (1) während des Einspritzvorgangs handelt.

2. Verfahren nach Anspruch 1, **dadurch gekennzeichnet, dass** als für den Einspritzvorgang charakteristische Größe ein Einspritzdruck ($p_e$), ein Schmelzedruck ($p_s$), ein Forminnendruck ($p_i$), eine Forminnentemperatur ($T_i$), eine Einspritzgeschwindigkeit, ein Antriebsmoment und/oder eine Einspritzarbeit gemessen wird.

3. Verfahren nach Anspruch 1 oder 2, **dadurch gekennzeichnet, dass** die Prozessschwankung in Form von Schwankungen des Schussvolumens einer Verschiebung ($\Delta$x) der Messfunktion ($f_M$) in Bezug auf die Referenzfunktion ($f_R$) in Verschieberichtung (x) der Einspritzvorrichtung (2) als Transformationsparameter ($u_j$) zugeordnet ist.

4. Verfahren nach wenigstens einem der Ansprüche 1 bis 3, wobei als für den Einspritzvorgang charakteristische Größe der Einspritzdruck ($p_e$), der Schmelzedruck ($p_s$) und/oder der Forminnendruck ($p_i$) gemessen wird, **dadurch gekennzeichnet, dass** die Prozessschwankung in Form von Schwankungen des Druckbedarfs zur Füllung wenigstens einer Kavität (13) der Spritzgießmaschine (1) während des Einspritzvorgangs einer Skalierung ($k_p$) der Messfunktion ($f_M$) in Bezug auf die Referenzfunktion ($f_R$) in Richtung des gemessenen Einspritzdrucks ($p_e$), Schmelzedrucks ($p_s$) bzw. Forminnendrucks ($p_i$) als Transformationsparameter ($u_j$) zugeordnet ist.

5. Verfahren nach einem der Ansprüche 1 bis 4, **dadurch gekennzeichnet, dass** in einem Referenzzyklus während zumindest eines Teils des Einspritzvorgangs wenigstens eine für den Einspritzvorgang charakteristische Größe ($p_e$, $p_s$, $p_i$, $T_i$) für eine Vielzahl von Positionen (x) der Einspritzvorrichtung (2) gemessen und durch Zuordnung der jeweiligen Messwerte zu den jeweiligen Positionen die Referenzfunktion ($f_R$) gebildet wird.

6. Verfahren nach einem der Ansprüche 1 bis 5, **dadurch gekennzeichnet, dass** bei einem Mehrfachwerkzeug mit wenigstens zwei Kavitäten (13) für jede der Kavitäten (13) während zumindest eines Teils des Einspritzvorgangs wenigstens eine für den Einspritzvorgang in jede der Kavitäten (13) charakteristische Größe ($p_i$, $T_i$) für eine Vielzahl von Positionen (x) der Einspritzvorrichtung (2) gemessen und durch Zuordnung der jeweiligen Messwerte zu den jeweiligen Positionen eine Messfunktion ($f_M$) gebildet wird.

7. Verfahren nach Anspruch 6, **dadurch gekennzeichnet, dass** eine Messfunktion ($f_M$) einer Kavität (13) als Referenzfunktion ($f_R$) festgelegt wird, oder dass eine über wenigstens zwei Messfunktionen ($f_M$) zweier Kavitäten (13) gemittelte Funktion als Referenzfunktion ($f_R$) bereitgestellt wird.

8. Verfahren nach einem der Ansprüche 1 bis 7, **dadurch gekennzeichnet, dass** die Bestimmung des wenigstens einen frei wählbaren Transformationsparameters ($u_j$) mittels eines Regressionsverfahrens erfolgt.

9. Verfahren nach einem der Ansprüche 1 bis 8, **dadurch gekennzeichnet, dass** zumindest ein Teil der Punktepaare, aus denen die Messfunktion ($f_M$) gebildet wurde, mit einer unterschiedlichen Gewichtung in die Bestimmung des wenigstens einen frei wählbaren Transformationsparameters ($u_j$) einbezogen wird.

10. Verfahren nach einem der Ansprüche 1 bis 9, **dadurch gekennzeichnet, dass** die Bestimmung des wenigstens einen frei wählbaren Transformationsparameters ($u_j$) während des Einspritzvorgangs, in dem die Messfunktion ($f_M$) gebildet wurde, erfolgt, oder dass die Bestimmung des wenigstens einen frei wählbaren Transformationsparameters ($u_j$) im Anschluss an einen ersten Spritzgießzyklus erfolgt.

11. Verfahren nach Anspruch 10, wobei die Bestimmung des wenigstens einen frei wählbaren Transformationsparameters ($u_j$) im Anschluss an einen ersten Spritzgießzyklus erfolgt, **dadurch gekennzeichnet, dass** die Bestimmung des wenigstens einen frei wählbaren Transformationsparameters ($u_j$) zwischen dem ersten und einem zweiten, nachfolgenden Spritzgießzyklus oder während eines zweiten, nachfolgenden Spritzgießzyklus erfolgt.

12. Verfahren nach einem der Ansprüche 1 bis 11, **dadurch gekennzeichnet, dass** die unter Verwendung des wenigstens einen Transformationsparameters ($u_j$) quantifizierte Prozessschwankung durch wenigstens eine entsprechende Korrekturmaßnahme ausgeglichen wird.

13. Verfahren nach Anspruch 12, wobei die Bestimmung des wenigstens einen Transformationsparameters ($u_j$) während des Einspritzvorgangs, in dem die Messfunktion ($f_M$) gebildet wurde, erfolgt, **dadurch gekennzeichnet, dass** der Ausgleich der unter Verwendung dieses wenigstens einen Transformationsparameters ($u_j$) quantifizierten Prozessschwankung durch die wenigstens eine entsprechende Korrekturmaßnahme in dem Spritzgießzyklus des Einspritzvorgangs, in dem die Messfunktion ($f_M$) gebildet wurde, erfolgt.

14. Verfahren nach Anspruch 12, **dadurch gekennzeichnet, dass** sich der Ausgleich der unter Verwendung des wenigstens einen Transformationsparameters ($u_j$) quantifizierten Prozessschwankung durch die wenigstens eine entsprechende Korrekturmaßnahme über wenigstens einen dem Spritzgießzyklus, in dem die Prozessschwankung quantifiziert wurde, nachfolgenden Spritzgießzyklus erstreckt.

**15.** Spritzgießmaschine (1) mit einer über eine Vielzahl von Positionen (x) verschiebbaren Einspritzvorrichtung (2), insbesondere Schnecke (2), einer Messvorrichtung zur Messung der Positionen (x) der Einspritzvorrichtung (2), wenigstens einer Messvorrichtung (17, 14, 15, 16) zur Messung wenigstens einer für den Einspritzvorgang der Spritzgießmaschine (1) charakteristischen Größe ($p_e$, $p_s$, $p_i$, T), wenigstens einer Kavität (13) und einer Steuerungs- und/oder Regelungseinrichtung (18) zur Durchführung des Verfahrens nach einem der Ansprüche 1 bis 14.

**Claims**

**1.** A method of quantifying process fluctuations ($P_i$) in an injection process of an injection moulding machine (1) which has an injection device (2), in particular a screw (2), displaceable over a plurality of positions (x), **characterised in that**

- at least one mathematical transformation ($U_k$) which transforms an output function ($f_A$) into an image function ($f_B$) in dependence on at least one freely selectable transformation parameter ($u_j$) is provided, wherein a process fluctuation ($P_i$) is associated with the at least one transformation parameter ($u_j$),
- during at least a part of the injection process at least one value ($p_e$, $p_s$, $p_i$, $T_i$) characteristic of the injection process is measured for a plurality of positions (x) of the injection device (2) and a measurement function ($f_M$) is formed by association of the respective measurement values with the respective positions,
- a reference function ($f_R$) is provided which is of a predetermined value for each of the positions (x) of the injection device (2), at which the characteristic value ($p_e$, $p_s$, $p_i$, $T_i$) was measured,
- the measurement function ($f_M$) is used as an output function ($f_A$) for the at least one provided mathematical transformation ($U_k$), wherein the at least one freely selectable transformation parameter ($u_j$) of said at least one mathematical transformation ($U_k$) is so determined that the resulting image function ($f_B$) coincides to the best possible degree with the reference function ($f_R$) in relation to a predetermined error size and the process fluctuation ($P_i$) associated with said transformation parameter ($u_j$) is quantified in relation to the reference function ($f_R$) using the at least one transformation parameter ($u_j$),
- one of the process fluctuations ($P_i$) is fluctuations in the shot volume and one of the process fluctuations is fluctuations in the pressure requirement for filling at least one cavity (13) of the injection moulding machine (1) during the injection process.

**2.** A method according to claim 1 **characterised in that** an injection pressure ($p_e$), a melt pressure ($p_s$), an internal mould pressure ($p_i$), an internal mould temperature ($T_i$), an injection speed, a drive moment and/or an injection work is measured as the value characteristic of the injection process.

**3.** A method according to claim 1 or 2, **characterised in that** the process fluctuation is associated in the form of fluctuations in the shot volume with a displacement ($\triangle x$) of the measurement function ($f_M$) in relation to the reference function ($f_R$) in the displacement direction (x) of the injection device (2) as a transformation parameter ($u_j$).

**4.** A method according to at least one of claims 1 to 3, wherein the injection pressure ($p_e$), the melt pressure ($p_s$) and/or the internal mould pressure ($p_i$) is measured as the value characteristic of the injection process, **characterised in that** the process fluctuation is associated in the form of fluctuations in the pressure requirement for filling at least one cavity (13) of the injection moulding machine (1) during an injection process with a scaling ($k_p$) of the measurement function ($f_M$) in relation to the reference function ($f_R$) in the direction of the measured injection pressure ($p_e$), melt pressure ($p_s$) and internal mould pressure ($p_i$) respectively as the transformation parameter ($u_j$).

**5.** A method according to one of claims 1 to 4, **characterised in that** in a reference cycle during at least a part of the injection process at least one value ($p_e$, $p_s$, $p_i$, $T_i$) characteristic of the injection process is measured for a plurality of positions (x) of the injection device (2) and the reference function ($f_R$) is formed by association of the respective measurement values with the respective positions.

**6.** A method according to one of claims 1 to 5, **characterised in that** in the case of a multiple tool having at least two cavities (13), for each of the cavities (13) during at least a part of the injection process at least one value ($p_i$, $T_i$) characteristic of the injection process into each of the cavities (13) is measured for a plurality of positions (x) of the injection device (2) and a measurement function ($f_M$) is formed by association of the respective measurement values with the respective positions.

**7.** A method according to claim 6, **characterised in that** a measurement function ($f_M$) of a cavity (13) is established as a reference function ($f_R$) or a function averaged over at least two measurement functions ($f_M$) of two cavities (13) is provided as the reference function ($f_R$).

8. A method according to one of claims 1 to 7, **characterised in that** the operation of determining the at least one freely selectable transformation parameter ($u_j$) is effected by means of a regression method.

9. A method according to one of claims 1 to 8, **characterised in that** at least some of the pairs of points from which the measurement function ($f_M$) was formed is incorporated with a differing weighting into the determination of the at least one freely selectable transformation parameter ($u_j$).

10. A method according to one of claims 1 to 9, **characterised in that** the operation of determining the at least one freely selectable transformation parameter ($u_j$) is effected during the injection process in which the measurement function ($f_M$) was formed or the operation of determining the at least one freely selectable transformation parameter ($u_j$) is effected following a first injection moulding cycle.

11. A method according to claim 10, wherein the operation of determining the at least one freely selectable transformation parameter ($u_j$) is effected following a first injection moulding cycle, **characterised in that** the operation of determining the at least one freely selectable transformation parameter ($u_j$) is effected between the first and a second subsequent injection moulding cycle or during a second subsequent injection moulding cycle.

12. A method according to one of claims 1 to 11, **characterised in that** the process fluctuation quantified using the at least one transformation parameter ($u_j$) is compensated by at least one suitable correction measure.

13. A method according to claim 12, wherein the operation of determining the at least one transformation parameter ($u_j$) is effected during the injection process in which the measurement function ($f_M$) was formed, **characterised in that** compensation of the process fluctuation quantified using said at least one transformation parameter ($u_j$) is effected by the at least one suitable correction measure in the injection moulding cycle of the injection process, in which the measurement function ($f_M$) was formed.

14. A method according to claim 12, **characterised in that** compensation of the process fluctuation quantified using said at least one transformation parameter ($u_j$) by the at least one suitable correction measure extends over at least one injection moulding cycle following the injection moulding cycle in which the process fluctuation was quantified.

15. An injection moulding machine (1) having an injection device (2), in particular a screw (2), displaceable over a plurality of positions (x), a measuring device for measuring the positions (x) of the injection device (2), at least one measuring device (17, 14, 15, 16) for measuring at least one value ($p_e$, $p_s$, $p_i$, $T_i$) characteristic of the injection process of the injection moulding machine (1), at least one cavity (13) and a control and/or regulating device (18) which is adapted to carry out the method according to one of claims 1 to 14.

**Revendications**

1. Procédé de quantification de basculements de procédés ($P_i$) dans un processus d'injection d'une machine de moulage par injection (1), qui présente un dispositif de moulage par injection (2) déplaçable sur une pluralité de positions (x), en particulier une vis sans fin (2), **caractérisé en ce que**

   - est mise à disposition au moins une transformation mathématique ($U_k$), laquelle transforme, en fonction d'au moins un paramètre de transformation ($U_j$) librement sélectionnable, une fonction de sortie ($f_A$) en une fonction d'image ($f_B$), dans laquelle un basculement de procédés ($P_i$) étant affecté au moins un paramètre de transformation ($u_j$),
   - pendant au moins une partie du processus d'injection au moins une grandeur caractéristique ($p_e$, $p_s$, $p_i$, $T_i$) pour le processus d'injection est mesurée pour une pluralité de positions (x) du dispositif de moulage par injection (2) et une fonction de mesure ($f_M$) est formée par affectation des valeurs de mesure respectives aux positions respectives,
   - une fonction de référence ($f_R$) est mise à disposition, qui présente une valeur prédéterminée pour chacune des positions (x) du dispositif de moulage par injection (2), dans lesquelles la grandeur caractéristique ($p_e$, $p_s$, $p_i$, $T_i$) a été mesurée,
   - la fonction de mesure ($f_M$) est utilisée comme fonction de sortie ($f_A$) pour la au moins une transformation mathématique ($U_k$) mise à disposition, dans laquelle le au moins un paramètre de transformation ($U_j$) librement

sélectionnable de cette au moins une transformation mathématique ($U_k$) est déterminé de manière telle que la fonction d'image ($f_B$) en résultant relative à une mesure d'erreur prédéterminée correspond le mieux possible à la fonction de référence ($f_R$), et le basculement de procédés ($P_I$) affecté à ce paramètre de transformation ($u_j$) est quantifié en référence à la fonction de référence ($f_R$) en utilisant le au moins un paramètre de transformation ($u_j$),

- il s'agit dans un des basculements de procédés de basculements du volume d'injection et qu'il s'agit dans un des basculements de procédés de basculements du besoin en pression pour remplir au moins une cavité (13) de la machine de moulage par injection (1) pendant le processus d'injection.

2. Procédé selon la revendication 1, **caractérisé en ce que** comme grandeur caractéristique pour le processus d'injection est mesurée une pression d'injection ($p_e$), une pression de fusion ($p_s$), une pression interne du moule ($p_i$), une température interne du moule ($T_i$), une vitesse d'injection, un couple d'entraînement et / ou un travail d'injection.

3. Procédé selon la revendication 1 ou 2, **caractérisé en ce que** le basculement de procédés sous forme de basculements du volume d'injection est affecté en tant que paramètre de transformation ($u_j$) à un déplacement ($\Delta x$) de la fonction de mesure ($f_M$) en référence à la fonction de référence ($f_R$) dans le sens de déplacement (x) du dispositif de moulage par injection (2).

4. Procédé selon au moins une des revendications 1 à 3, dans lequel comme grandeur caractéristique pour le processus d'injection est mesurée la pression d'injection ($p_e$), la pression de fusion ($p_s$) et / ou la pression interne du moule ($p_i$), **caractérisé en ce que** le basculement de procédés sous forme de basculements du besoin en pression pour le remplissage d'au moins une cavité (13) de la machine de moulage par injection (1) pendant le processus d'injection est affecté comme paramètre de transformation ($u_j$) à une échelle ($k_p$) de la fonction de mesure ($f_M$) en référence à la fonction de référence ($f_R$) dans le sens de la pression d'injection mesurée ($p_e$), de la pression de fusion ($p_s$) ou de la pression interne du moule ($p_i$) .

5. Procédé selon l'une des revendications 1 à 4, **caractérisé en ce que** dans un cycle de référence pendant au moins une partie du processus d'injection est mesurée au moins une grandeur caractéristique ($p_e$, $p_s$, $p_i$, $T_i$) pour le processus d'injection pour une pluralité de positions (x) du dispositif de moulage par injection (2) et par affectation des valeurs de mesure respectives aux positions respectives est formée la fonction de référence ($f_R$).

6. Procédé selon l'une des revendications 1 à 5, **caractérisé en ce que** dans un outil à plusieurs empreintes avec au moins deux cavités (13) pour chacune des cavités (13) pendant au moins une partie du processus d'injection est mesurée au moins une grandeur caractéristique ($p_i$, $T_i$) pour le processus d'injection dans chacune des cavités (13) pour une pluralité de positions (x) du dispositif de moulage par injection (2) et par affectation des valeurs de mesure respectives aux positions respectives est formée une fonction de mesure ($f_M$).

7. Procédé selon la revendication 6, **caractérisé en ce qu'**une fonction de mesure ($f_M$) d'une cavité (13) est fixée comme fonction de référence ($f_R$), ou **en ce qu'**une fonction pondérée par au moins deux fonctions de mesure ($f_M$) de deux cavités (13) est mise à disposition en tant que fonction de référence ($f_R$).

8. Procédé selon l'une des revendications 1 à 7, **caractérisé en ce que** la détermination du au moins un paramètre de transformation ($U_j$) librement sélectionnable se fait à l'aide d'une technique de régression.

9. Procédé selon l'une des revendications 1 à 8, **caractérisé en ce que** au moins une partie des paires de points, à partir desquelles la fonction de mesure ($f_M$) a été formée, est intégrée avec une pondération variable dans la détermination du au moins un paramètre de transformation ($U_j$) librement sélectionnable.

10. Procédé selon l'une des revendications 1 à 9, **caractérisé en ce que** la détermination du au moins un paramètre de transformation ($U_j$) librement sélectionnable se fait pendant le processus d'injection, dans lequel la fonction de mesure ($f_M$) a été formée, ou **en ce que** la détermination du au moins un paramètre de transformation ($U_j$) librement sélectionnable se fait à la suite d'un premier cycle de moulage par injection.

11. Procédé selon la revendication 10, dans lequel la détermination du au moins un paramètre de transformation ($U_j$) librement sélectionnable se fait à la suite d'un premier cycle de moulage par injection, **caractérisé en ce que** la détermination du au moins un paramètre de transformation ($U_j$) librement sélectionnable se fait entre le premier et un deuxième cycle de moulage par injection suivant ou pendant un deuxième cycle de moulage par injection suivant.

**12.** Procédé selon l'une des revendications 1 à 11, **caractérisé en ce que** le basculement de procédés quantifié en utilisant le au moins un paramètre de transformation ($U_j$) est compensé par au moins une mesure corrective correspondante.

**13.** Procédé selon la revendication 12, dans lequel la détermination du au moins un paramètre de transformation ($U_j$) se fait pendant le processus d'injection, dans lequel a été formée la fonction de mesure ($f_M$), **caractérisé en ce que** la compensation du basculement de procédés quantifié en utilisant ce au moins un paramètre de transformation ($U_j$) se fait par la au moins une mesure corrective correspondante dans le cycle de moulage par injection du processus d'injection, dans lequel la fonction de mesure ($f_M$) a été formée.

**14.** Procédé selon la revendication 12, **caractérisé en ce que** la compensation du basculement de procédés quantifié en utilisant le au moins un paramètre de transformation ($U_j$) s'étend par la au moins une mesure corrective correspondante sur au moins un cycle de moulage par injection suivant le cycle de moulage par injection, dans lequel a été quantifié le basculement de procédés.

**15.** Machine de moulage par injection (1) avec un dispositif de moulage par injection (2) déplaçable sur une pluralité de positions (x), en particulier une vis sans fin (2), d'un dispositif de mesure pour mesurer les positions (x) du dispositif de moulage par injection (2), au moins un dispositif de mesure (17, 14, 15, 16) pour mesurer au moins une grandeur caractéristique ($p_e$, $p_s$, $p_i$, T) pour le processus d'injection de la machine de moulage par injection (1), au moins une cavité (13) et un dispositif de commande et / ou de réglage (18), qui est installé pour exécuter le procédé selon l'une des revendications 1 à 14.

Fig. 1

Fig. 2

Fig. 3

EP 2 583 811 B2

## Fig. 4a

## Fig. 4b

## Fig. 5a

## Fig. 5b

## Fig. 6a

## Fig. 6b

Fig. 7a

Fig. 7b

Fig. 8a

Fig. 8b

Fig. 9a

Fig. 9b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008037098 A1
- DE 4446857 A